# FASCICULE DE BREVET EUROPEEN

(11) **EP 3 477 517 B1**
(45) Date de publication et mention de la délivrance du brevet: **22.07.2020**
(21) Numéro de dépôt: 18202756.5
(22) Date de dépôt: 26.10.2018
(51) Int. Cl.: G06F 21/31, G06F 21/34, G06F 21/35, G06F 21/57, G06F 21/62

(54) **PROCÉDÉ DE CONTRÔLE D'ACCÈS À UNE ZONE SÉCURISÉE D'UN ÉQUIPEMENT, PROGRAMME D'ORDINATEUR, SUPPORT INFORMATIQUE ET ÉQUIPEMENT ASSOCIÉS**
VERFAHREN FÜR DIE ZUGANGSKONTROLLE ZU EINER GESICHERTEN ZONE EINES GERÄTS, ENTSPRECHENDES COMPUTERPROGRAMM, ENTSPRECHENDER DATENSPEICHER UND ENTSPRECHENDES GERÄT
METHOD FOR CONTROLLING ACCESS TO A SECURE AREA OF A DEVICE, ASSOCIATED COMPUTER PROGRAM, COMPUTER MEDIUM AND DEVICE

(30) Priorité: 27.10.2017 FR 1760159
(43) Date de publication de la demande: 01.05.2019
(73) Titulaire: ALSTOM Transport Technologies, 93400 Saint-Ouen (FR)
(72) Inventeur: DEGENEVE, Xavier, 69003 Lyon (FR); FOUQUES, Baptiste, 69100 Villeurbanne (FR)
(74) Mandataire: Lavoix

(56) Documents cités:
- WO-A1-2009/034018
- FR-A1- 2 916 068

## Description

La présente invention concerne un procédé de contrôle d'accès à une zone sécurisée d'un équipement électronique.

L'invention concerne également un programme d'ordinateur et un support informatique associés.

L'invention concerne, en outre, un équipement électronique associé.

Dans le domaine ferroviaire, il est connu d'équiper des équipements électroniques, embarqués dans des véhicules ferroviaires ou installés au sol le long d'une ligne ferroviaire, avec une interface utilisateur permettant notamment la mise à jour ou la configuration de tels équipements.

Pour éviter que des utilisateurs non habilités prennent le contrôle de tels équipements, des procédés de contrôle d'accès ont été mis en place. En particulier, il est connu un procédé de contrôle d'accès, dans lequel chaque équipement comprend un identifiant commun à plusieurs utilisateurs et un authentifiant, tel qu'un mot de passe, associé à l'identifiant commun. Pour avoir accès à une zone sécurisée de l'équipement, l'utilisateur communique, à l'équipement, l'identifiant commun et l'authentifiant associé.

Cependant, un tel procédé ne permet pas d'adapter, et notamment de restreindre, les droits d'accès associés à une configuration pour des utilisateurs spécifiques. En outre, un tel procédé n'est pas adapté pour donner des droits d'accès temporaires à un utilisateur, ce qui pose des problèmes de sécurité. Pour qu'un utilisateur ne puisse plus accéder à l'équipement, il convient de modifier l'identifiant et l'authentifiant mémorisés sur l'équipement, ce qui est contraignant à mettre en œuvre.

Il est également connu un procédé de contrôle d'accès dans lequel les données d'authentification des utilisateurs habilités sont mémorisées dans un serveur central connecté aux équipements. Toute personne souhaitant se connecter à l'équipement communique audit équipement son identifiant et son authentifiant. L'équipement communique alors ces données au serveur central qui renvoie en retour une autorisation ou une interdiction d'accès à l'équipement.

Toutefois, un tel procédé nécessite un serveur central et n'est donc pas adapté aux équipements isolés ou situés dans des zones sans réseau, ce qui est le cas pour la majorité des équipements ferroviaires.

Il est aussi connu du document WO 2009/034018 A un procédé d'accès par un utilisateur à un dispositif d'un système de contrôle industriel. L'accès est contrôlé au moyen d'une mémoire mobile ou de moyens de stockage de tickets d'accès.

Il existe donc un besoin pour un procédé de contrôle de l'accès à des équipements isolés ou situés dans des zones sans réseau qui soit adaptable et simple à mettre en oeuvre tout en conférant un bon niveau de sécurité.

A cet effet, l'invention a pour objet un procédé de contrôle d'accès à une zone sécurisée d'un équipement électronique à partir d'un fichier informatique, l'équipement électronique comprenant une mémoire comprenant au moins une zone sécurisée, le fichier informatique étant spécifique à un utilisateur et mémorisé sur un support informatique, le fichier informatique comprenant un authentifiant de référence et un droit d'accès à l'équipement électronique pour au moins une zone sécurisée correspondante, la mémoire comprenant au moins un droit d'accès de référence à l'équipement électronique, le procédé étant mis en œuvre par l'équipement électronique et comprenant :
- l'acquisition de l'authentifiant de référence via le fichier informatique suite à une connexion du support informatique à l'équipement électronique,
- l'acquisition d'un authentifiant en provenance de l'utilisateur,
- l'authentification de l'utilisateur par comparaison de l'authentifiant en provenance de l'utilisateur avec l'authentifiant de référence,
- l'acquisition du droit d'accès via le fichier informatique lorsqu'à l'issue de l'authentification, l'authentifiant en provenance de l'utilisateur est conforme avec l'authentifiant de référence, et
- l'ouverture d'une session d'accès à ladite au moins une zone sécurisée correspondante, lorsque le droit d'accès acquis correspond au droit d'accès de référence compris dans la mémoire.

Suivant d'autres aspects avantageux de l'invention, le procédé de contrôle d'accès comprend une ou plusieurs des caractéristiques suivantes, prises isolément ou suivant toutes les combinaisons techniquement possibles :
- le fichier informatique est signé avec une clé de signature, la clé de signature étant associée à un certificat d'une autorité de certification, le certificat de l'autorité de certification associé à la clé de signature étant mémorisée dans la mémoire, le procédé comprenant en outre, préalablement à l'acquisition du droit d'accès, la vérification de la signature du fichier informatique avec le certificat de l'autorité de certification mémorisée dans la mémoire.
- le support informatique est un support physique amovible, tel qu'un support de mémoire FLASH, par exemple, une clé USB.
- le support informatique est un support dématérialisé, tel qu'un fichier informatique mémorisé sur un serveur réseau.
- le fichier informatique comprend une date de validité, l'équipement électronique comprenant une horloge, et dans lequel l'ouverture de la session d'accès comporte en outre la comparaison de ladite date de validité avec une date courante fournie par l'horloge, la session étant ouverte uniquement lorsque la date de validité est postérieure à ladite date courante.
- le fichier informatique comprend au moins une configuration visant à modifier l'équipement, le procédé comprenant l'exécution de la configuration sur l'équipement électronique après l'ouverture de la session.

L'invention concerne également un programme d'ordinateur comportant des instructions logicielles qui lorsqu'elles sont exécutées par un ordinateur mettent en œuvre un procédé de contrôle d'accès tel que défini ci-dessus.

Suivant un autre aspect avantageux de l'invention, l'équipement tel que décrit précédemment est un équipement ferroviaire configuré pour être embarqué à bord d'un véhicule ferroviaire, tel qu'un moteur, un système d'affichage, un système de climatisation, un équipement réseau, un équipement de sécurité, un équipement de signalisation ou un équipement de contrôle ferroviaire, ou bien pour être installé au sol le long d'une ligne ferroviaire, tel qu'un feu, un aiguillage ou un passage à niveau.

L'invention a également pour objet un procédé de contrôle d'accès selon la revendication 1.

Suivant d'autres aspects avantageux de l'invention, le procédé de contrôle d'accès comprend une ou plusieurs des caractéristiques des revendications 2 à 7, prises isolément ou suivant toutes les combinaisons techniquement possibles.

L'invention concerne aussi un équipement électronique selon la revendication 8.

Suivant un autre aspect avantageux de l'invention, l'équipement présente aussi les caractéristiques de la revendication 9.

D'autres caractéristiques et avantages de l'invention apparaîtront à la lecture de la description qui suit, donnée uniquement à titre d'exemple non limitatif, et faite en référence aux dessins annexés, sur lesquels :
- la figure 1 est une représentation schématique d'un équipement électronique et d'un support selon l'invention, et
- la figure 2 est un organigramme d'un procédé de contrôle mis en œuvre par l'équipement électronique de la figure 1.

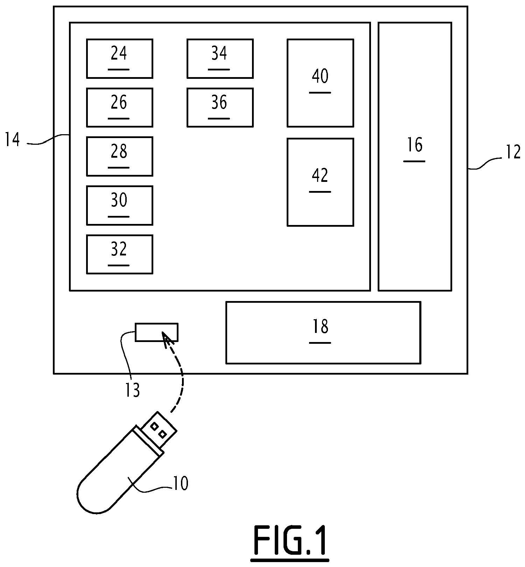

Un support informatique 10 et un équipement électronique 12 sont illustrés sur la figure 1.

Le support informatique 10 est configuré pour être connecté à l'équipement électronique 12.

Dans l'exemple illustré sur la figure 1, le support 10 est un support physique amovible. Il est entendu par le terme « amovible » qu'un tel support est apte à être séparé de l'équipement électronique 12. Dans l'exemple de la figure 1, le support 10 est destiné à être détenu par un utilisateur de l'équipement électronique 12. De préférence, le support 10 est propre à être transporté sans effort par un tel utilisateur. Avantageusement, la masse du support 10 est inférieure ou égale à 500 grammes (g), de préférence inférieure ou égale à 300 g, de préférence encore inférieure ou égale à 100 g.

Par exemple, le support 10 est un support de mémoire FLASH, tel qu'une clé USB. En variante, le support 10 est une disquette ou disque souple (de la dénomination anglaise *floppy disk*), un disque optique, un CD-ROM, un DVD, un disque magnéto-optique, une mémoire ROM, une mémoire RAM, une mémoire EPROM, une mémoire EEPROM, une carte magnétique ou une carte optique.

En variante, le support 10 est un support dématérialisé ou virtuel. Par exemple, le support 10 est un fichier informatique mémorisé sur un serveur réseau ou sur tout autre organe informatique ou électronique. Dans ce cas, l'équipement électronique 12 est en interaction avec ledit organe informatique ou électronique. Dans un autre exemple, le support 10 est une pièce-jointe jointe à un courriel informatique.

Le support 10 comprend un fichier informatique spécifique à un utilisateur. Par « spécifique », il est entendu que le fichier contient des informations propres uniquement à un utilisateur donné. Tout autre utilisateur de l'équipement 12 se verra alors attribuer un autre fichier informatique.

En complément facultatif, le support 10 comprend plusieurs fichiers informatiques spécifiques à des utilisateurs, éventuellement différents les uns des autres.

De préférence, le fichier informatique est signé avec une clé de signature, aussi appelée « clé privée », La vérification de validité de la signature du fichier se fait alors avec une clé appelée « certificat d'une autorité de certification » aussi appelée « clé publique » ou une chaine de certificats associée à une autorité de certification. Une telle vérification permet de garantir l'intégrité et l'authenticité des données contenues dans le fichier informatique. Il est entendu par le terme « authenticité » que les données proviennent d'une entité dûment autorisée à générer le fichier informatique. Il est entendu par le terme « intégrité » que les données en elles-mêmes ne sont pas altérées ou modifiées.

Avantageusement, les données contenues dans le fichier informatique sont chiffrées, et ce notamment lorsque de telles données sont confidentielles.

Le fichier informatique comprend un authentifiant de référence et au moins un droit d'accès à l'équipement électronique 12 pour au moins une zone sécurisée correspondante dudit équipement 12.

Le droit d'accès est, par exemple, une autorisation d'ouvrir une session donnant accès à une zone sécurisée dudit équipement 12. Une telle autorisation est, par exemple, accordée pendant un temps déterminé. Une telle autorisation permet, par exemple, l'utilisation de données décrites dans le fichier informatique pour modifier une configuration de l'équipement 12.

Dans un autre exemple, le droit d'accès est commun à plusieurs équipements 12, voire à des équipements 12 différents. Par exemple, le droit d'accès autorise l'accès à tous les systèmes de climatisation d'un réseau de véhicules ferroviaires. En variante, le droit d'accès autorise l'accès aux systèmes de climatisation de seulement un véhicule ferroviaire donné.

L'authentifiant de référence est spécifique à l'utilisateur destiné à détenir ou à avoir accès au support 10.

L'authentifiant de référence est, par exemple, un élément de connaissance secret tel qu'un mot de passe ou une donnée d'indentification physique, notamment une donnée biométrique, telle qu'une image d'une empreinte digitale de l'utilisateur ou une image d'un iris de l'utilisateur. En variante, l'authentifiant de référence est un élément physique en possession de l'utilisateur, tel qu'un jeton physique ou une carte à puce.

De préférence, le fichier informatique comprend une date de validité, au-delà de laquelle les données contenues dans le fichier informatique ont expiré et ne sont donc plus valables.

L'équipement électronique 12 est un équipement autonome. Il est entendu par le terme « autonome » que l'équipement 12 n'est pas connecté à un serveur, local ou centralisé, pour fonctionner.

En variante, l'équipement électronique 12 est un équipement relié à un réseau informatique.

L'équipement 12 est, par exemple, un équipement ferroviaire configuré pour être embarqué à bord d'un véhicule ferroviaire, tel qu'un moteur, un système d'affichage, un système de climatisation, un équipement réseau, un équipement de sécurité, un équipement de signalisation, un équipement de contrôle ferroviaire, ou bien pour être installé au sol le long d'une ligne ferroviaire, tel qu'un feu, un aiguillage ou un passage à niveau.

L'équipement 12 comprend une entrée 13, une mémoire 14, un processeur 16 et une interface homme-machine 18. En complément facultatif, lorsque le fichier informatique comprend une date de validité, l'équipement 12 comprend aussi une horloge, non représentée, affichant une date courante.

L'équipement 12 comprend, en outre, différents modules mémorisés dans la mémoire 14 de l'équipement 12 et propres à être exécutés par le processeur 16 de l'équipement 12. En particulier, dans l'exemple illustré sur la figure 1, l'équipement 12 comprend, un module de vérification de signature 24, un premier module d'acquisition 26, un deuxième module d'acquisition 28, un module d'authentification 30, un troisième module d'acquisition 32, un module d'ouverture 34 et un module d'exécution 36.

L'entrée 13 est configurée pour être connectée au support 10 et pour permettre l'extraction des données contenues dans le fichier informatique du support 10.

Par exemple, lorsque le support 10 est une clé USB, l'entrée 13 est un port USB. Lorsque le support 10 est un CD ou un DVD, l'entrée 13 est un lecteur de CD et/ou de DVD. Lorsque le support 10 est un disque optique, l'entrée 13 est un lecteur de disque optique. Lorsque le support 10 est une disquette, l'entrée 13 est un lecteur de disquette. Lorsque le support 10 est un fichier informatique mémorisé sur un serveur réseau, l'entrée 13 est une entrée réseau, telle qu'une entrée Ethernet/IP, Wifi, Radiomobile, GSM, 3G ou encore LTE.

La mémoire 14 comprend une zone libre d'accès 40 et au moins une zone sécurisée 42. La zone libre d'accès 40 est accessible à tout utilisateur de l'équipement 12 sans authentification, ni autorisation d'accès. La zone sécurisée 42 est accessible seulement à des données authentifiées et/ou à des actions effectuées par des utilisateurs agréés de l'équipement 12, c'est à dire des utilisateurs qui ont été authentifiés et se sont vus autorisés l'accès à l'équipement 12 selon le procédé de contrôle d'accès selon l'invention.

La mémoire 14 comprend, en outre, au moins un droit d'accès de référence à l'équipement électronique 12. Le droit d'accès de référence autorise l'accès à au moins une zone sécurisée 42 de l'équipement 12.

En outre, lorsque le fichier informatique du support 10 est signé, la mémoire 14 comprend le certificat de l'autorité de certification.

Lorsque le fichier informatique du support 10 est chiffré, la mémoire 14 comprend une clé de déchiffrement du fichier informatique.

En variante, au moins une partie de la mémoire 14 est comprise dans un serveur connecté à l'équipement électronique 12.

L'interface homme-machine 18 est, par exemple, un clavier, un écran, une souris, une interface distante réseau (terminal réseau, page web) ou encore un microphone.

Le module de vérification de signature 24 est propre à vérifier la signature du fichier informatique avec le certificat de l'autorité de certification.

Le premier module d'acquisition 26 est propre à acquérir un authentifiant de référence via le fichier informatique, suite à une connexion de l'équipement 12 au fichier informatique. L'authentifiant de référence acquis est l'authentifiant de référence mémorisé dans le fichier informatique du support 10.

Le deuxième module d'acquisition 28 est propre à acquérir un authentifiant saisi par l'utilisateur via l'interface homme-machine 18.

Le module d'authentification 30 est propre à authentifier l'utilisateur par comparaison de l'authentifiant saisi avec l'authentifiant de référence.

Lorsque l'authentifiant saisi est valide au regard de l'authentifiant de référence, l'utilisateur est authentifié. Lorsque l'authentifiant saisi n'est pas valide, l'utilisateur n'est pas authentifié.

Le troisième module d'acquisition 32 est propre à acquérir un droit d'accès via le fichier informatique, et ce seulement lorsque le module d'authentification 30 a authentifié l'utilisateur.

En complément facultatif, le troisième module d'acquisition 32 est propre à acquérir plusieurs ou l'ensemble des droits d'accès du fichier informatique lorsque le module d'authentification 30 a authentifié l'utilisateur.

En complément facultatif encore, lorsque le fichier informatique comprend une date de validité, le quatrième module d'acquisition 33 est propre à acquérir la date de validité du fichier informatique.

Le module d'ouverture 34 est propre à ouvrir une session d'accès à ladite au moins une zone sécurisée 42 correspondante, lorsque le droit d'accès acquis correspond au droit d'accès de référence compris dans la mémoire 14 et, le cas échéant selon le complément facultatif précité, lorsque la date de validité acquise est postérieure à la date courante fournie par l'horloge de l'équipement 12.

La session d'accès est, par exemple, une session autorisant l'accès à la zone sécurisée 42 pendant une durée déterminée. La session d'accès est, par exemple, une session autorisant la modification de la configuration de l'équipement 12, par exemple, la modification d'un logiciel embarqué dans l'équipement 12.

De préférence, lorsque le fichier informatique comprend au moins une configuration visant à modifier l'équipement 12, le module d'exécution 36 est propre à exécuter, après l'ouverture d'une session par le module d'ouverture 34, au moins une configuration visant à modifier l'équipement 12.

Les configurations sont, par exemple, des configurations visant à mettre à jour l'équipement 12. En variante, les configurations sont des comportements paramétrables de l'équipement 12, tels que, des adressages réseau, l'identification d'entrées et de sorties, des caractéristiques physiques des éléments contrôlés par l'équipement 12 et l'exécution de modules applicatifs.

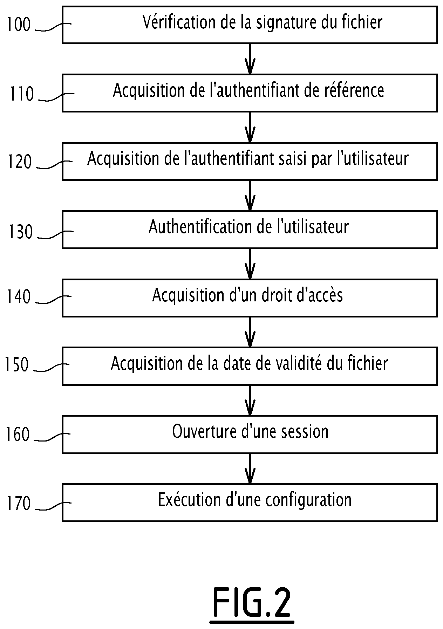

Un procédé de contrôle d'accès va maintenant être décrit en référence à la figure 2. Le procédé de contrôle d'accès est mis en œuvre par l'équipement électronique 12 en interaction avec le support informatique 10.

Initialement, l'équipement électronique 12 est connecté au fichier informatique du support 10. Lorsque le support 10 est un support physique amovible, une telle connexion est réalisée par l'utilisateur via l'entrée 13. Lorsque le support 10 est un support dématérialisé, tel qu'un fichier informatique mémorisé sur un serveur réseau ou sur tout autre organe informatique ou électronique, l'équipement électronique 12 se connecte au support 10 éventuellement via une connexion sans fil.

Lorsque le fichier informatique du support 10 est signé, le procédé de contrôle comprend une étape 100 de vérification de la signature du fichier informatique par le module de vérification de signature 24, à l'aide du certificat de l'autorité de certification mémorisée dans la mémoire 14.

Puis, lors d'une étape 110, le premier module d'acquisition 26 acquiert l'authentifiant de référence compris dans le fichier informatique.

Ensuite, lors d'une étape 120, l'utilisateur saisit ou communique un authentifiant via l'interface homme-machine 18. L'authentifiant saisi ou communiqué par l'utilisateur est alors acquis par le deuxième module d'acquisition 28.

Lors d'une étape 130 suivante, le module d'authentification 30 authentifie l'utilisateur par comparaison de l'authentifiant saisi avec l'authentifiant de référence. L'utilisateur est authentifié seulement lorsque l'authentifiant saisi est valide au regard de l'authentifiant de référence.

Puis, lors d'une étape 140, lorsque le module d'authentification 30 a authentifié l'utilisateur, le troisième module d'acquisition 32 acquiert un droit d'accès compris dans le fichier informatique.

En outre, lorsque le fichier informatique comprend une date de validité selon le complément facultatif précité, le quatrième module d'acquisition 33 acquiert, lors d'une étape 150, la date de validité du fichier informatique.

Lors d'une étape 160 suivante, le module d'ouverture 34 ouvre une session d'accès à ladite au moins une zone sécurisée 42 correspondante, lorsque le droit d'accès acquis correspond au droit d'accès de référence compris dans la mémoire 14 et, le cas échéant, lorsque la date de validité acquise est postérieure à la date courante fournie par l'horloge de l'équipement 12.

Lorsque le fichier informatique comprend au moins une configuration visant à modifier l'équipement 12, le module d'exécution 36 exécute, lors d'une étape 170 suivante, au moins une configuration visant à modifier l'équipement 12.

Ainsi, le procédé de contrôle selon l'invention permet à un utilisateur d'accéder de manière sécurisée à un équipement 12. En effet, le support 10 étant spécifique à un utilisateur donné, si un tiers prend possession du support 10, ledit tiers ne pourra pas s'en servir s'il ne connaît pas l'authentifiant de l'utilisateur. En outre, cela permet également d'identifier univoquement l'utilisateur physique. En outre, le fichier peut être rendu obsolète par l'ajout d'une date de validité au fichier, ce qui résout le problème des utilisateurs temporaires.

Le procédé de contrôle ne nécessite pas de réseaux centralisés pour fonctionner. Un tel procédé est donc utilisable pour des équipements 12 isolés ou situés dans des zones sans réseau.

Ainsi, un tel procédé de contrôle permet l'accès à des équipements isolés ou situés dans des zones sans réseau tout en étant adaptable et simple à mettre en œuvre et en conférant un bon niveau de sécurité.

## Revendications

1. Procédé de contrôle d'accès à une zone sécurisée (42) d'un équipement électronique (12) à partir d'un fichier informatique, l'équipement électronique (12) comprenant une mémoire (14) comprenant au moins une zone sécurisée (42), le fichier informatique étant spécifique à un utilisateur et mémorisé sur un support informatique (10), le fichier informatique comprenant un authentifiant de référence et un droit d'accès à l'équipement électronique (12) pour au moins une zone sécurisée (42) correspondante, la mémoire (14) comprenant au moins un droit d'accès de référence à l'équipement électronique (12), le procédé étant mis en œuvre par l'équipement électronique (12) et comprenant :
- l'acquisition (110) de l'authentifiant de référence via le fichier informatique suite à une connexion du support informatique (10) à l'équipement électronique (12),
- l'acquisition (120) d'un authentifiant en provenance de l'utilisateur,
- l'authentification (130) de l'utilisateur par comparaison de l'authentifiant en provenance de l'utilisateur avec l'authentifiant de référence,
- l'acquisition (140) du droit d'accès via le fichier informatique lorsqu'à l'issue de l'authentification (130), l'authentifiant en provenance de l'utilisateur est conforme à l'authentifiant de référence, et
- l'ouverture (160) d'une session d'accès à ladite au moins une zone sécurisée (42) correspondante, lorsque le droit d'accès acquis correspond au droit d'accès de référence compris dans la mémoire (14).

2. Procédé selon la revendication 1, dans lequel le fichier informatique est signé avec une clé de signature, la clé de signature étant associée à un certificat d'une autorité de certification, le certificat de l'autorité de certification associé à la clé de signature étant mémorisée dans la mémoire (14), le procédé comprenant en outre, préalablement à l'acquisition (140) du droit d'accès, la vérification (100) de la signature du fichier informatique avec le certificat de l'autorité de certification mémorisée dans la mémoire (14).

3. Procédé selon la revendication 1 ou 2, dans lequel le support informatique (10) est un support physique amovible, tel qu'un support de mémoire FLASH, par exemple, une clé USB.

4. Procédé selon la revendication 1 ou 2, dans lequel le support informatique (10) est un support dématérialisé, tel qu'un fichier informatique mémorisé sur un serveur réseau.

5. Procédé selon l'une quelconque des revendications 1 à 4, dans lequel le fichier informatique comprend une date de validité, l'équipement électronique (12) comprenant une horloge, et
dans lequel l'ouverture de la session d'accès comporte en outre la comparaison de ladite date de validité avec une date courante fournie par l'horloge, la session étant ouverte uniquement lorsque la date de validité est postérieure à ladite date courante.

6. Procédé selon l'une quelconque des revendications 1 à 5, dans lequel le fichier informatique comprend au moins une configuration visant à modifier l'équipement (12), le procédé comprenant l'exécution (170) de la configuration sur l'équipement électronique (12) après l'ouverture de la session.

7. Programme d'ordinateur comportant des instructions logicielles qui, lorsqu'elles sont exécutées par un ordinateur, mettent en œuvre un procédé selon l'une quelconque des revendications 1 à 6.

8. Equipement électronique (12) comprenant une mémoire (14) comprenant au moins une zone sécurisée (42), l'équipement électronique (12) étant configuré pour interagir avec un fichier informatique, le fichier informatique étant spécifique à un utilisateur et mémorisé sur un support informatique (10), le fichier informatique comprenant un authentifiant de référence et un droit d'accès à l'équipement électronique (12) pour au moins une zone sécurisée (42) correspondante, la mémoire (14) comprenant au moins un droit d'accès de référence à l'équipement électronique (12), l'équipement (12) comprenant :
- un premier module (26) d'acquisition d'un authentifiant de référence via le fichier informatique suite à une connexion du support informatique (10) à l'équipement électronique (12),
- un deuxième module (28) d'acquisition d'un authentifiant en provenance de l'utilisateur,
- un module (30) d'authentification de l'utilisateur par comparaison de l'authentifiant en provenance de l'utilisateur avec l'authentifiant de référence,
- un troisième module (32) d'acquisition du droit d'accès via le fichier informatique lorsque le module (30) d'authentification a authentifié l'utilisateur, et
- un module (34) d'ouverture d'une session d'accès à ladite au moins une zone sécurisée (42) correspondante, lorsque le droit d'accès acquis correspond au droit d'accès de référence compris dans la mémoire (14).

9. Equipement (12) selon la revendication 8, dans lequel l'équipement (12) est un équipement ferroviaire configuré pour être embarqué à bord d'un véhicule ferroviaire, tel qu'un moteur, un système d'affichage, un système de climatisation, un équipement réseau, un équipement de sécurité, un équipement de signalisation ou un équipement de contrôle ferroviaire, ou bien pour être installé au sol le long d'une ligne ferroviaire, tel qu'un feu, un aiguillage ou un passage à niveau.

## Patentansprüche

1. Verfahren zur Überwachung des Zugangs zu einem gesicherten Bereich (42) einer elektronischen Vorrichtung (12) aus einer Computerdatei, wobei die elektronische Vorrichtung (12) einen Speicher (14) mit mindestens einem gesicherten Bereich (42) umfasst, die Computerdatei für einen Benutzer spezifisch ist und auf einem Datenträger (10) gespeichert ist und die Computerdatei einen Referenzauthentifizierer und ein Zugangsrecht zu der elektronischen Vorrichtung (12) für mindestens einen entsprechenden gesicherten Bereich (42) umfasst, wobei der Speicher (14) mindestens ein Referenzzugangsrecht zu der elektronischen Vorrichtung (12) umfasst, wobei das Verfahren von der elektronischen Vorrichtung (12) durchgeführt wird und umfasst:
- Beschaffen (110) des Referenzauthentifizierers über die Computerdatei folgend auf eine Verbindung des Datenträgers (10) mit der elektronischen Vorrichtung (12),
- Beschaffen (120) eines Authentifizierers seitens des Benutzers,
- Authentifizieren (130) des Benutzers durch Vergleich des Authentifizierers seitens des Benutzers mit dem Referenzauthentifizierer,
- Beschaffen (140) des Zugangsrechts über die Computerdatei, wenn am Ende der Authentifizierung (130) der Authentifizierer seitens des Benutzers mit dem Referenzauthentifizierer übereinstimmt, und
- Öffnen (160) eines Vorgangs des Zugangs zu dem mindestens einen entsprechenden gesicherten Bereich (42), wenn das beschaffte Zugangsrecht dem in dem Speicher (14) enthaltenen Referenzzugangsrecht entspricht.

2. Verfahren nach Anspruch 1, bei dem die Computerdatei mit einem Signaturschlüssel signiert ist, wobei der Signaturschlüssel einem Zertifikat einer Zertifizierungsstelle zugeordnet ist und das dem Signaturschlüssel zugeordnete Zertifikat der Zertifizierungsstelle in dem Speieher (14) gespeichert ist, wobei das Verfahren außerdem vor dem Beschaffen (140) des Zugangsrechts die Überprüfung (100) der Signatur der Computerdatei mit dem in dem Speicher (14) gespeicherten Zertifikat der Zertifizierungsstelle umfasst.

3. Verfahren nach Anspruch 1 oder 2, bei dem der Datenträger (10) ein physisch lösbarer Träger ist, wie ein Flash Speicherträger, beispielsweise ein USB Schlüssel.

4. Verfahren nach Anspruch 1 oder 2, bei dem der Datenträger (10) ein digitaler Träger ist, wie eine auf einem Netzserver gespeicherte Computerdatei.

5. Verfahren nach einem beliebigen der Ansprüche 1 bis 4, bei dem die Computerdatei ein Gültigkeitsdatum enthält und die elektronische Vorrichtung (12) eine Uhr umfasst, und
bei dem das Öffnen des Zugangsvorganges außerdem den Vergleich des Gültigkeitsdatums mit einem von der Uhr gelieferten aktuellen Datum umfasst, wobei der Vorgang nur geöffnet wird, wenn das Gültigkeitsdatum nach dem aktuellen Datum liegt.

6. Verfahren nach einem beliebigen der Ansprüche 1 bis 5, bei dem die Computerdatei mindestens eine Konfiguration umfasst, die auf eine Modifizierung der Vorrichtung (12) zielt, wobei das Verfahren die Ausführung (170) der Konfiguration auf der elektronischen Vorrichtung (12) nach dem Öffnen des Vorgangs umfasst.

7. Computerprogramm, das Softwarebefehle aufweist, die, wenn sie von einem Rechner ausgeführt werden, ein Verfahren nach einem beliebigen der Ansprüche 1 bis 6 durchführen.

8. Elektronische Vorrichtung (12), die einen Speicher (14) mit mindestens einem gesicherten Bereich (42) aufweist, wobei die elektronische Vorrichtung (12) konfiguriert ist, mit einer Computerdatei zusammenzuarbeiten, wobei die Computerdatei für einen Benutzer spezifisch ist und auf einem Datenträger (10) gespeichert ist, die Computerdatei einen Referenzauthentifizierer und ein Zugangsrecht zu der elektronischen Vorrichtung (12) für mindestens einen entsprechenden gesicherten Bereich (42) umfasst, wobei der Speicher (14) mindestens ein Referenzzugangsrecht zu der elektronischen Vorrichtung (12) umfasst, wobei die Vorrichtung (12) umfasst:
- ein erstes Modul (26) zum Beschaffen des Referenzauthentifizierers über die Computerdatei folgend auf eine Verbindung des Datenträgers (10) mit der elektronischen Vorrichtung (12),
- ein zweites Modul (28) zum Beschaffen eines Authentifizierers seitens des Benutzers,
-- ein Modul (30) zum Authentifizieren des Benutzers durch Vergleich des Authentifizierers seitens des Benutzers mit dem Referenzauthentifizierer,
- ein drittes Modul (32) zum Beschaffen des Zugangsrechts über die Computerdatei, wenn das Authentifizierungsmodul (30) den Benutzer authentifiziert hat, und
- ein Modul (34) zum Öffnen eines Vorgangs des Zugangs zu dem mindestens einen entsprechenden gesicherten Bereich (42), wenn das beschaffte Zugangsrecht dem in dem Speicher (14) enthaltenen Referenzzugangsrecht entspricht.

9. Vorrichtung (12) nach Anspruch 8, bei der die Vorrichtung (12) eine Bahnvorrichtung ist, die ausgebildet ist, an Bord eines Schienenfahrzeug mitgeführt zu werden, wie ein Motor, ein Anzeigesystem, ein Klimatisierungssystem, eine Netzvorrichtung, eine Sicherheitsvorrichtung, eine Signalisierungsvorrichtung oder eine Bahnsteuervorrichtung, oder auch am Boden entlang eines Schienenweges installiert zu werden, wie eine Ampel, eine Weiche oder ein Bahnübergang.

## Claims

1. A method for controlling access to a secure zone (42) of a piece of electronic equipment (12) from a computer file, the electronic equipment (12) including a memory (14) including at least one secure zone (42), the computer file being specific to a user and stored on a computer medium (10), the computer file including a reference authenticator and a right to access the electronic equipment (12) for at least one corresponding secure zone (42), the memory (14) including at least one reference access right to the electronic equipment (12), the method being carried out by the electronic equipment (12) and including:
- acquiring (110) the reference authenticator via the computer file after connecting the computer medium (10) to the electronic equipment (12),
- acquiring (120) an authenticator from the user,
- authenticating (130) the user by comparing the authenticator from the user with the reference authenticator,
- acquiring (140) the access right via the computer file when, at the end of the authentication (130), the authenticator from the user is compliant with the reference authenticator, and
- opening (160) an access session to said at least one corresponding secure zone (42), when the acquired access right corresponds to the reference access right in the memory (14).

2. The method according to claim 1, wherein the computer file is signed with a signature key, the signature key being associated with a certificate from a certification authority, the certificate from the certification authority being stored in the memory (14), the method further including, before acquiring (140) the access right, verifying (100) the signature of the computer file with the certification of the certification authority stored in the memory (14).

3. The method according to claim 1 or 2, wherein the computer medium (10) is a removable physical medium, such as a FLASH memory medium, for example a USB key.

4. The method according to claim 1 or 2, wherein the computer medium (10) is a virtual medium, such as a computer file stored on a network server.

5. The method according to any one of claims 1 to 4, wherein the computer file includes a validity date, the electronic equipment (12) including a clock, and
wherein the opening of the access session further comprises comparing said validity date with a current date supplied by the clock, the session being open only when the validity date is after said current date.

6. The method according to any one of claims 1 to 5, wherein the computer file includes at least one configuration seeking to modify the equipment (12), the method including executing (170) the configuration on the electronic equipment (12) after opening the session.

7. A computer program comprising software instructions that, when executed by a computer, carry out an access control method according to any one of claims 1 to 6.

8. An electronic equipment (12) including a memory (14) including at least one secure zone (42), the electronic equipment (12) being configured to interact with a computer file, the computer file being specific to a user and stored on a computer medium (10), the computer file including a reference authenticator and an access right to the electronic equipment (12) for at least one corresponding secure zone (42), the memory (14) including at least one reference access right to the electronic equipment (12), the equipment (12) including:
- a first module (26) for acquiring a reference authenticator via the computer file after connecting the computer medium (10) to the electronic equipment (12),
- a second module (28) for acquiring an authenticator from the user,
- a module (30) for authenticating the user by comparing the authenticator from the user with the reference authenticator,
- a third module (32) for acquiring the access right via the computer file when the authentication module (30) has authenticated the user, and
- a module (34) for opening an access session to said at least one corresponding secure zone (42), when the acquired access right corresponds to the reference access right included in the memory (14).

9. The equipment (12) according to claim 8, wherein the equipment (12) is a piece of railway equipment configured to be placed on board a railway vehicle, such as a motor, a display system, an air conditioning system, a piece of network equipment, a piece of security equipment, a piece of signaling equipment or a piece of railway control equipment, or to be installed on the ground along a railway line, such as a light, a switch or a crossing.
